## Europäisches Patentamt

## European Patent Office

## Office européen des brevets

(19)

(11) Numéro de publication: **0 040 563**
**B1**

(12) # FASCICULE DE BREVET EUROPEEN

(45) Date de publication du fascicule du brevet:
**08.08.84**

(51) Int. Cl.³: **A 01 M 25/00**

(21) Numéro de dépôt: **81400768.8**

(22) Date de dépôt: **14.05.81**

(54) **Dispositif pour la lutte contre les rongeurs.**

(30) Priorité: **21.05.80 FR 8011301**

(43) Date de publication de la demande:
**25.11.81 Bulletin 81/47**

(45) Mention de la délivrance du brevet:
**08.08.84 Bulletin 84/32**

(84) Etats contractants désignés:
**AT BE CH DE GB IT LI LU NL SE**

(56) Documents cités:
**FR - A - 1 506 767**
**FR - A - 1 566 332**
**FR - A - 2 355 450**
**US - A - 2 912 788**

(73) Titulaire: **Waast, Emile, 47 bis, rue du Moulin,**
**F-59246 Mons En Pevele (FR)**

(72) Inventeur: **Waast, Emile, 47 bis, rue du Moulin,**
**F-59246 Mons En Pevele (FR)**

(74) Mandataire: **Maureau, Bernard, Cabinet Germain,**
**Maureau et Millet Conseils en Brevets d'Invention 64, rue**
**d'Amsterdam, F-75009 Paris (FR)**

BUNDESDRUCKEREI BERLIN

# Description

L'invention a pour objet un dispositif qui, permettant de lutter contre les rongeurs, est utilisable dans tous les lieux dans lesquels circulent ces animaux et convient plus particulièrement, quoique non exclusivement, dans les lieux de stockage de denrées alimentaires; et c'est ainsi notamment que ce dispositif trouve une aplication particulièrement avantageuse dans les locaux de stockage des farines et autres produits pulvérulents conditionnés pour l'alimentation humaine et l'alimentation du bétail.

Il est bien connu de lutter contre les rongeurs en déposant par ci, par là sur le sol ou ailleurs des appâts empoisinnés qui amènent ces animaux à crever très rapidement. Quel que soit leur mode d'action, ces appâts sont efficaces, mais ils sont dangereux, car après avoir été déposés sur les lieux de passage des rongeurs, ils sont accessibles non seulement à ces animaux particuliers, mais aussi aux animaux domestiques et même aux hommes, notamment aux enfants. En raison de leur efficacité, les appâts empoisonnés constituent donc un moyen de lutte contre les rongeurs, mais ce moyen doit être employé avec précaution.

Les brevets FR 1 566 332 et US 2 912 788 décrivent certes des dispositifs permettant l'utilisation de ces appâts en les rassemblant dans un réceptacle; ni l'un, ni l'autre de ces dispositifs n'apporte toutefois une entière efficacité et une totale sécurité d'emploi.

Dans un dispositif conforme au brevet FR 1 566 332, les appâts sont en effet placés dans une auge ou mangeoire, qui est disposée latéralement dans un corps en forme de tunnel dans lequel les rongeurs circulent, et qui communique avec un réservoir situé au-dessus. Les appâts n'agissent donc que si, lors de leur passage, les rongeurs s'alimentent volontairement.

Dans un dispositif conforme au brevet US 2 912 788, les appâts sont contenus dans un réservoir aménagé dans la partie supérieure d'une enceinte parallélépipédique, dont la partie inférieure constitue une chambre qui est séparée du réservoir supérieur par un fond incliné et qui communique avec lui par une étroite ouverture, inférieure, permettant le déversement dans cette chambre, d'une petite quantité d'appât. Deux ouverture latérales prévues dans cette chambre permettent l'accès des rongeurs; mais l'accès aux appâts n'est pas facile, même pour un rongeur; et surtout, rien ne s'oppose à ce que de l'appât ne soit pas évacué à l'extérieur par le rongeur.

Un dispositif conforme à l'invention agit de façon beaucoup plus efficace et plus sûre.

Ce dispositif consistant en un tunnel allongé, comportant deux extrémités complètement ouvertes, dimensionné pour permettre la circulation des rongeurs et dans la partie médiane duquel débouche un réservoir d'axe vertical déporté latéralement par rapport au tunnel et dans lequel est contenu l'appât, le réservoir et le tunnel communiquent par un orifice dont les dimensions sont suffisantes, en rapport avec celles du tunnel, pour permettre à l'appât de former dans le tunnel un talus d'éboulement qui obstrue le tunnel de façon à couper une section importante de celui-ci, de telle sorte que le corps du rongeur traversant le tunnel y prélève automatiquement, par simple contact, de l'appât qui sera consommé lors d'une toilette ultérieure, et à proximité de chacune de ses deux extrémités la face inférieure du tunnel porte au moins une barrette transversale interdisant au talus d'éboulement formé par l'appât de s'étendre à l'extérieur et limitant les risques de transport d'appât à l'extérieur par les rongeurs.

Le dessin schématique annexé représente, à titre d'exemple non limitatif, une forme d'exécution de ce dispositif pour la lutte contre les rongeurs:

Fig. 1 en est une vue en perspective, et
fig. 2 en est une vue en coupe transversale.

Ce dispositif est constitué par deux éléments essentiels qui sont associés l'un à l'autre, à savoir un tunnel ou couloir allongé 1 et un réservoir 2. Ce tunnel 1 et ce réservoir 2 peuvent être constitués en un matériau quelconque, notamment par exemple un matière plastique moulée, et dans ce dernier cas, ils peuvent, soit être moulés indépendamment l'un de l'autre et être ensuite assemblés, ou bien ils peuvent être réalisés par moulage en une seule pièce et en une seule opération.

Quels que soient leur nature et leur procédé de fabrication, le tunnel 1 et le réservoir 2 sont constitués de façon telle qu'ils communiquent l'un avec l'autre. A cet effet, le tunnel 1, qui présente une forme générale parallèlépipédique allongée, possède à mi-longeur de l'une de ses deux faces latérales longitudinales, une ouverture 3; et le réservoir 2, qui présente une forme générale cylindrique, possède lui-même une ouverture 4 grâce à laquelle il peut coopérer avec le tunnel 1, en donnant lieu à une communication entre ce tunnel et ce réservoir. Un bouchon amovible 5 est prévu à la partie supérieure du réservoir 2.

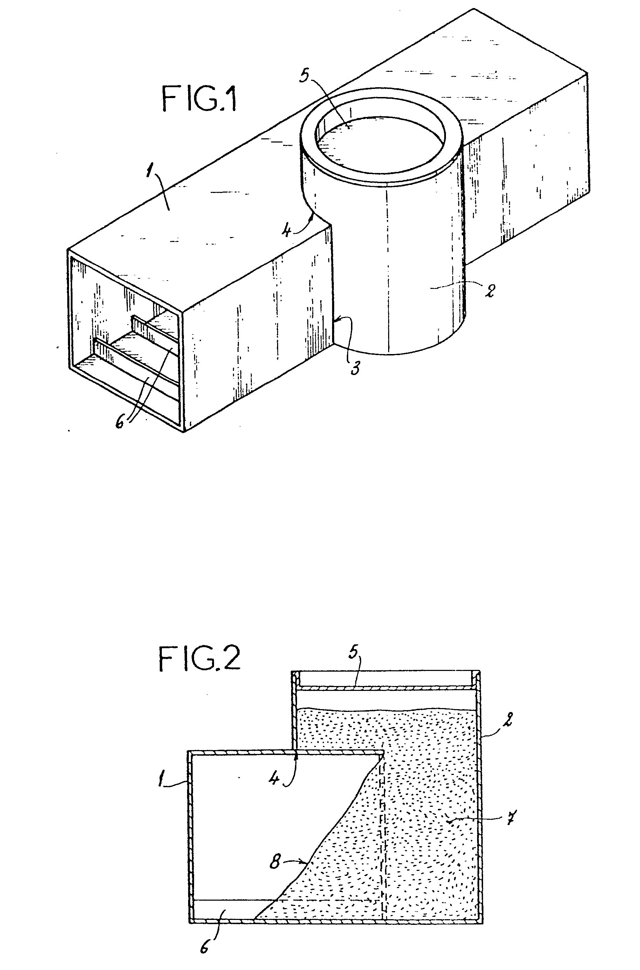

Ce réservoir est destiné à recevoir l'appât empoisonné 7, qui se présente par exemple sous forme pulvérulente, et qui, comme le montre la fig. 2, donne lieu, dans sa partie inférieure, à la formation d'un talus d'éboulement 8 qui obstrue partiellement le tunnel 1.

Il est ainsi aisément concevable que lorsqu'un rongeur traverse le tunnel 1, il rencontre automatiquement l'appât 7; et de deux choses l'une: ou bien il mange une partie de cet appât, ce qui donne lieu à son empoisonnement très rapide, ou bien, délaissant cet appât, il passe néanmoins à son contact et en recouvre plus ou moins les poils de son corps, ce qui conduira à son empoisonnement après sa première toilette.

Il est à remarquer que des barrettes transversales 6 sont prévues aux deux extrémités du tunnel 1 pour éviter, d'une part, que le talus d'éboulement 8 de l'appât 7 s'étende à l'extérieur du tunnel, et pour éviter, d'autre part, que les rongeurs transportent l'appât à l'extérieur de ce tunnel.

Comme il va de soi, l'invention ne se limite pas à la seule forme d'exécution de ce dispositif de lutte contre les rongeurs qui a été ci-dessus indiquée à titre d'exemple; elle en embrasse au contraire toutes les variantes de réalisation et elle étend bien entendu son champ d'application au cas où des moyens sont prévus pour permettre la fixation du tunnel sur le sol ou sur tout autre élément devant lui servir de support.

## Revendications

1. Dispositif pour la lutte contre les rongeurs, au moyen d'un appât empoisonné en poudre ou en grains, consistant en un tunnel allongé (1) aux deux extrémités complètement ouvertes, dimensionné pour permettre la circulation des rongeurs et dans la partie médiane duquel débouche un réservoir (2) d'axe vertical déporté latéralement par rapport au tunnel et dans lequel est contenu l'appât (7), caractérisé en ce que le réservoir (2) et le tunnel (1) communiquent par un orifice dont les dimensions sont suffisantes, en rapport avec celles du tunnel (1), pour permettre à l'appât (7) de former dans le tunnel (1) un talus d'éboulement (8) qui obstrue le tunnel de façon à couper une section importante de celui-ci, de telle sorte que le corps du rongeur traversant le tunnel y prélève automatiquement, par simple contact, de l'appât qui sera consommé lors d'une toilette ultérieure, et en ce qu'à proximité de chacune de ses deux extrémités, la face inférieure du tunnel (1) porte au moins une barrette transversale (6) interdisant au talus d'éboulement (8) formé par l'appât (7) de s'étendre à l'extérieur et limitant les risques de transport d'appât à l'extérieur par les rongeurs.

2. Dispositif pour la lutte contre les rongeurs selon la revendication 1, caractérisé en ce qu'il consiste en un tunnel (1) de forme générale parallélépipédique constitué en matière plastique injectée, dont l'une des faces latérales présente dans sa partie médiane une ouverture (3) s'étendant jusqu'à sa face inférieure et communiquant avec un réservoir (2) constitué aussi en matière plastique injectée présentant une ouverture lui permettant de s'imbriquer avec le tunnel (1) et de communiquer avec lui, et dont le fond prolonge sans discontinuité la face inférieure du tunnel.

## Patentansprüche

1. Vorrichtung zur Bekämpfung von Nagetieren mit Hilfe eines pulverförmigen oder körnigen Giftköders, bestehend aus einem langgestreckten Tunnel (1) mit zwei vollständig offenen Enden und mit solchen Abmessungen, daß Nagetiere sich im Inneren des Tunnels bewegen können, in dessen Mittelbereich ein Vorratsbehälter (2) mit gegenüber dem Tunnel seitwärts verschobener vertikaler Achse vorgesehen ist, der den Köder (7) aufnimmt, dadurch gekennzeichnet, daß der Vorratsbehälter (2) und der Tunnel (1) durch eine Öffnung miteinander verbunden sind, deren Abmessungen im Vergleich zu denjenigen des Tunnels (1) so groß gewählt sind, daß in dem Tunnel (1) eine Schüttung von Köder (7) mit einem Böschungswinkel (8) entstehen kann, der den Tunnel in einer solchen Weise versperrt, daß ein wesentlicher Teil der Querschnittsfläche des Tunnels verschlossen ist, so daß der Körper des durch den Tunnel laufenden Nagetiers durch einfache Berührung automatisch etwas von dem Köder abstreift, der dann beim nachfolgenden Putzen verzehrt wird, und daß an der Innenseite des Tunnels (1) in der Nähe seiner beiden Enden mindestens ein Quersteg (6) angebracht ist, der es verhindert, daß die von dem Köder (7) gebildete Schüttgutabböschung (8) aus dem Tunnel heraus nach außen reicht, und der die Gefahr des Mitführens von Köder nach draußen durch die Nagetiere einschränkt.

2. Vorrichtung zur Bekämpfung von Nagetieren, nach Anspruch 1, dadurch gekennzeichnet, daß sie aus einem aus Spritzgußkunststoff hergestellten, insgesamt quaderförmigen Tunnel (1) besteht, dessen eine Seitenfläche in ihrem Mittelbereich eine Öffnung (3) aufweist, die bis zu der Unterseite des Tunnels reicht und mit einem Vorratsbehälter (2) in Verbindung steht, der ebenfalls aus Spritzgußkunststoff hergestellt ist und eine Öffnung aufweist, die ihm das Einführen in den Tunnel (1) und die Herstellung einer Verbindung mit dem Tunnel ermöglicht, und dessen Boden eine stufenlose Verlängerung der Unterseite des Tunnels darstellt.

## Claims

1. A device for rodent control by means of a poisoned bait in powder or granular form, consisting of an elongated tunnel (1) with two completely open ends dimensioned so as to allow the movement of rodents and in the central portion whereof, there opens out a reservoir (2) with a vertical axis offset laterally with respect to the tunnel and wherein bait (7) is contained, characterised in that reservoir (2) and tunnel (1) communicate via an opening whose dimensions are sufficient in relation to those of tunnel (1) to allow bait (7) to form in tunnel (1) a crumbling slope (8) obstructing the tunnel so as to cut off a considerable cross section of the latter so that the body of the rodent passing through the tunnel does there automatically draw off by simple contact some bait which will be eaten during a subsequent grooming and that in the vicinity of each one of its two ends, the bottom of tunnel (1) carries at least one transverse strip (6) stopping the crumbling slope (8) formed by bait (7) from extending to the outside, and limiting the risk of the bait being carried outside by the rodents.

2. A device for rodent control according to claim 1, characterised in that it consists of a tunnel (1) of a general parallelepiped shape formed of an injection moulded plastic substance whose one lateral side has, in its central portion, an opening (3) extending as far as its bottom and communicating with a reservoir (2) also formed of an injection moulded plastic material having an opening allowing it to overlap with tunnel (1) and to communicate therewith and whose bottom extends the tunnel bottom without any break.

FIG.1

FIG.2